# EUROPÄISCHE PATENTSCHRIFT

(11) **EP 2 954 181 B1**
(45) Veröffentlichungstag und Bekanntmachung des Hinweises auf die Patenterteilung: **29.03.2017**
(21) Anmeldenummer: 14700497.2
(22) Anmeldetag: 15.01.2014
(51) Int. Cl.: F02B 37/18, F16B 7/06, F16B 7/18, F16B 37/06

(54) **ABGASTURBOLADER MIT EINER REGELEINHEIT**
TURBOCHARGER WITH CONTROL LINKAGE
TURBOCOMPRESSEUR AVEC UNE UNITÉ DE RÉGLAGE

(30) Priorität: 11.02.2013 DE 102013202191
(43) Veröffentlichungstag der Anmeldung: 16.12.2015
(73) Patentinhaber: Continental Automotive GmbH, 30165 Hannover (DE)
(72) Erfinder: JÄGLE, Alexander, 68309 Mannheim (DE); FERLING, Bruno, 67259 Beindersheim (DE); FIETSCH, Alexander, 67551 Worms (DE); PAULOV, Mark, 67125 Dannstadt-Schauernheim (DE)
(86) Internationale Anmeldenummer: PCT/EP2014/050661
(87) Internationale Veröffentlichungsnummer: WO 2014/121984

(56) Entgegenhaltungen:
- JP-A- S59 153 920
- US-A1- 2004 028 468

## Beschreibung

Die Erfindung betrifft einen Abgasturbolader, der eine Regeleinheit zur Leistungsteuerung des Abgasturboladers und einen Aktuator aufweist, wobei die Regeleinheit von dem Aktuator verstellbar ist. Der Aktuator ist über eine Schubstange und ein Anschlusselement mit der Regeleinheit verbunden.

Abgasturbolader dienen dazu, den Wirkungsgrad eines Verbrennungsmotors zu verbessern und damit dessen Leistung zu steigern. Der Abgasturbolader weist hierzu eine Turbine mit einem Turbinenrad und einen Verdichter mit einem Verdichterrad auf, wobei die beiden Laufräder auf einer gemeinsamen Welle angeordnet sind. Das Turbinenrad wird hierbei über einen Abgasmassenstrom des Verbrennungsmotors angetrieben und treibt wiederum das Verdichterrad an. Der Verdichter verdichtet angesaugte Frischluft und führt diese dem Verbrennungsmotor zu. Die gemeinsame Welle ist in einem Lagergehäuse des Turboladers gelagert. Des Weiteren ist das Turbinenrad der Turbine in einem Turbinengehäuse angeordnet und das Verdichterrad des Verdichters in einem Verdichtergehäuse.

Je mehr die Motordrehzahl steigt, desto schneller dreht sich durch die antreibende Abgasmenge das Turbinenrad der Turbine und mit diesem auch die Welle des Abgasturboladers, auf welcher sich weiterhin das Verdichterrad des Verdichters befindet. Durch die schnellere Drehung der Welle und damit auch des Verdichterrades erhöht sich die Luftfördermenge des Verdichters. Dies führt zu einer wachsenden Abgasmenge des Motors und damit wiederum zu einem schnelleren Antreiben des Turbinenrades. Um die jeweils gegebenen mechanischen und thermischen Grenzen des Motors nicht zu überschreiten, ist eine Regelung des Abgasturboladers notwendig.

Eine derartige Regelung eines Abgasturboladers kann unter Verwendung einer variablen Turbinengeometrie oder eines im Turbinengehäuse vorgesehenen Wastegatekanals bzw. Bypasskanals, der mittels eines Wastegate- oder Bypassventil genannten Schließelements verschließbar ist, erfolgen. Dieses Schließelement kann bei Bedarf geöffnet werden, um in Abhängigkeit von der Öffnungsstellung einen mehr oder weniger großen Teil des Abgases an der Turbine vorbei direkt in den Auspuff des Fahrzeugs zu leiten. Dadurch wird ein weiteres Ansteigen der Turbinendrehzahl unterbunden.

Es ist bekannt, eine solche Regeleinheit (Schließelement eines Wastegatekanals oder variable Turbinengeometrie) unter Verwendung eines elektrischen oder pneumatischen Aktuators zu verstellen.

Es ist des Weiteren bereits bekannt, die Kopplung eines derartigen Aktuators mit der Regeleinheit unter Verwendung eines aktuatorseitigen Stellglieds, zum Beispiel einer Schubstange oder Regelstange, und eines schließelementseitigen Betätigungshebels vorzunehmen.

Um eine exakte Steuerung der Regeleinheit mittels des Aktuators zu gewährleisten, ist es notwendig, Fertigungs- und Montagetoleranzen der einzelnen Komponenten und deren Position zueinander auszugleichen. Daher muss jeder Abgasturbolader genau abgestimmt werden, was einen erheblichen Justier- und Montageaufwand bei der Montage erforderlich macht.

Aus der DE 10 2011 007072 A1 ist ein Abgasturbolader bekannt, der einen mittels eines Schließelementes verschließbaren Wastegatekanal aufweist. Der das Schließelement verstellbare Aktuator ist mit dem Schließelement über ein als Regelstange ausgebildetes Stellglied und ein zwischen dem Stellglied und dem Schließelement vorgesehenes schwenkbares Führungselement als Betätigungshebel verbunden. Das Führungselement ist mit einem flach ausgebildeten Führungshebel verbunden, der in einen Schlitz des Stellglieds eingesetzt ist.

In der EP 1256703 B1 ist ebenfalls ein Abgasturbolader offenbart, der einen Wastegatekanal, ein Schließelement und einen Aktuator aufweist. Das Schließelement kann über einen Betätigungshebel geöffnet oder geschlossen werden, wobei das Stellglied, eine Regelstange des Aktuators, mit dem Betätigungshebel verbunden ist. Sie umfasst ein längliches Element und wenigstens ein Abschnitt dieses Elements ist ausreichend flexibel, um sich bei der Verwendung um eine Linie zu biegen, um so Positionsabweichungen zu kompensieren.

Ferner zeigt die JP S59 153920 A einen Abgasturbolader mit einem Wastegateventil, wobei das Ventil mittels eines Aktuators mehr oder weniger weit geöffnet werden kann.

Weiterhin wird auf die US 2004 0028 468 A1 hingewiesen, die eine einstellbare Schubstange offenbart, die eine Einstellhülse aufweist, wobei die Schubstange zur Einstellung ihrer Länge durch Drehung der Einstellhülse verlängert oder verkürzt werden kann.

Der vorliegenden Erfindung liegt die Aufgabe zugrunde, einen Abgasturbolader mit einer Regeleinheit, die mittels eines Aktuators über einen Betätigungshebel und eine Schubstange verstellt wird, zu entwickeln, wobei in einer Verbindung zwischen dem Betätigungshebel und der Schubstange auftretende Fertigungs- und Montagetoleranzen ausgeglichen werden, wobei die Verbindung möglichst einfach herzustellen ist, und wobei eine möglichst einfache Zugänglichkeit dieser Verbindung für die Montage ermöglicht wird.

Diese Aufgabe wird erfindungsgemäß durch einen Abgasturbolader mit den Merkmalen des Hauptanspruchs gelöst. Vorteilhafte Ausgestaltungen der Erfindung ergeben sich mit den Merkmalen der Unteransprüche.

Der vorgeschlagene Abgasturbolader weist eine Regeleinheit zur Leistungsregelung des Abgasturboladers und einen Aktuator zur Betätigung der Regeleinheit auf. Die Regeleinheit ist über einen ihr zugeordneten Betätigungshebel mittels einer Schubstange des Aktuators betätigbar und die Schubstange des Aktuators ist mit einem Betätigungshebel der Regeleinheit über ein Einstellglied verbunden. Das Einstellglied weist ein Schrauben-Mutterelement und ein damit in Eingiff stehendes Anschlusselement auf, wobei das Anschlusselement mit dem Betätigungshebel gekoppelt ist und das Schrauben-Mutterelement einen ersten Gewindebereich aufweist, über den es mit dem Anschlusselement gekoppelt ist und einen zweiten Gewindebereich, über den es mit der Schubstange gekoppelt ist. Erfindungsgemäß ist der Abgasturbolader dadurch gekennzeichnet, dass das Schrauben-Mutterelement ein in einer Durgangsbohrung angeordnetes Innengewinde und ein auf dem Außenumfang eines zylinderförmigen Ansatzstückes angeordnetes Außengewinde aufweist, wobei das Anschlusselement ein dem Außengewinde (5) des Schrauben-Mutterelementes (1) entsprechendes Innengewinde und die Schubstange dazu korrespondierend ein dem Innengewinde (4) des Schrauben-Mutterelementes (1) entsprechendes Außengewinde aufweist, die jeweils mit dem Schrauben-Mutterelement verschraubt sind.

Erfindungsgemäß weist das Schrauben-Mutterelement in der Durchgangsbohrung ein Innengewinde und auf dem Außenumfang des zylinderförmigen Ansatzstückes ein Außengewinde auf. Bei dieser Ausführung weist dann das Anschlusselement ein dem Außengewinde des Ansatzstückes entsprechendes Innengewinde auf und die Schubstange des Aktuators weist auf ihrem Außenumfang ein dem Innengewinde der Durchgangsbohrung des Schrauben-Mutterelements entsprechendes Außengewinde auf. Die Schubstange des Aktuators ist dann in der Durchgangsbohrung des Schrauben-Mutterelements angeordnet und steht im Eingriff mit dessen Innengewinde. Das zylinderförmige Ansatzstück des Schrauben-Mutterelements wiederum steht mit seinem Außengewinde im Eingriff mit dem Innengewinde des Anschlusselements.

Weiterhin weisen das Innengewinde in der Durchgangsbohrung und das Außengewinde auf dem Ansatzstück des Schrauben-Mutterelementes jeweils ein gleichsinnig verlaufendes Gewinde mit gleicher Steigung auf.

Die Montage des Anschlusselements und der Schubstange kann dann in einfacher Weise in einem Schraubvorgang mittels des Schrauben-Mutterelements erfolgen.
Durch die Schraubverbindung zwischen Schrauben-Mutterelement und Anschlusselement des Einstellgliedes können Fertigungs- und Montagetoleranzen, die den Abstand zwischen Aktuator und Regeleinheit betreffen, auf einfache Art ausgeglichen werden und eine Verbindung zwischen der Schubstange des Aktuators und dem Betätigungshebel kann in der Montage auf einfache Weise positionsgenau eingestellt werden. Darüber hinaus erlaubt die Verwendung dieses Einstellgliedes es, die Schubstange des Aktuators von lediglich einer Seite aus mit dem Betätigungshebel zu befestigen. Hierdurch wird eine herkömmliche Verbindungstechnik zum Beispiel mittels zweier justierbarer Konter-Muttern vorteilhaft ersetzt, welche eine beidseitige, schwer zu automatisierende Zugänglichkeit am Anschlusselement erfordert. Durch eine Automatisierung wird eine Montage der Verbindung zwischen der Schubstange und dem Anschlusselement vereinfacht und es können Kosten eingespart werden.

Diese Ausführung ist besonders vorteilhaft wenn beim Montagevorgang, beim Erstellen der Verbindung zwischen Schrauben-Mutterelement und Anschlusselement die voreingestellte Position von Schubstange und Betätigungshebel beibehalten, also nicht mehr verändert werden sollen. Dies ist insbesondere von Vorteil, wenn es sich bei dem Aktuator um einen elektromechanischen Aktuator handelt.

Gleichfalls kann jedoch ein pneumatischer Aktuator eingesetzt werden. Auch in diesem Fall wird bei der Montage zunächst das Schrauben-Mutterelement auf das Außengewinde der Schubstange aufgedreht und das Anschlusselement mit dem Betätigungshebel der Regeleinheit verbunden. Dann werden die Schubstange mit dem Schrauben-Mutterelement sowie der Betätigungshebel mit dem Anschlusselement in die gewünschte Position zueinander gebracht. In weiterer Folge wird dann das Schrauben-Mutterelement entgegen der Drehrichtung beim Aufdrehen auf die Schubstange gedreht, wobei das Außengewinde des Ansatzstückes in Eingriff mit dem Innengewinde des Anschlusselements gebracht wird. Durch die Gleichsinnigkeit und die gleiche Steigung der Gewinde bewegt sich nun das Schrauben-Mutterelement in gleichem Maß und gleicher Richtung relativ zu Schubstange und Anschlusselement in das Innengewinde des Anschlusselements hinein und stellt so die Verbindung her.

In einer alternativen Ausführungsform können das Innengewinde in der Durchgangsbohrung und das Außengewinde auf dem Ansatzstück des Schrauben-Mutterelementes, sowie die zugehörigen Außengewinde auf der Schubstange bzw. Innengewinde im Anschlusselement auch gleichsinnig verlaufen jedoch jeweils eine unterschiedliche Steigung aufweisen.
Wenn nun mittels des Einstellglieds mit dem Betätigungshebel verbunden wird, wie oben beschrieben, dann werden sich durch die unterschiedlichen Steigungen der Gewinde die Schubstange und das Anschlusselement zusammen mit dem Betätigungshebel relativ zu einander verschieben. Diese Ausführung ist vor allem von Vorteil wenn der Aktuator ein pneumatischer Aktuator ist. Dann kann nämlich die genannte relative Verschiebung durch eine elastische Ruckstellung einer sich im Aktuator befindenden Feder kompensiert werden. Die Feder kann somit bei der Montage des Systems vorgespannt werden.

In einer bevorzugten Ausführungsform umfasst das Schrauben-Mutterelement einen für das Aufsetzen eines Festziehwerkzeuges, zum Beispiel einen Schraubenschlüssel, ausgebildeten, auch als Kopf bezeichneten Betätigungsbereich, der vorzugsweise als Sechskant-Schraubenkopf ausgebildet ist, und welcher mit dem zylinderförmigen, eine Durchgangsbohrung aufweisenden Ansatzstück des Schrauben-Mutterelements einstückig verbunden ist. Mittels des Festziehwerkzeuges können das Schrauben-Mutterelement und das Anschlusselement in der Montage dann durch ineinanderschrauben auf einfache Weise miteinander verbunden werden. Dadurch, dass dazu nur das Schrauben-Mutterelement betätigt werden muss, ist in der Montage lediglich der Zugang zum Kopf des Schrauben-Mutterelements und der Einsatz eines Werkzeugs erforderlich.

Um einem eventuellen Verschleiß im Schrauben-Mutterelement vorzubeugen, kann es vorteilhaft sein, das Schrauben-Mutterelement nach dem Verbinden der Schubstange mit dem Anschlusselement mit einer Kontermutter zu verspannen. Ein Verdrehen des Schrauben-Mutterelements während des Betriebs des Turboladers wird hierdurch verhindert. Hierzu kann die Kontermutter beispielsweise auf der Schubstange vormontiert sein.

Ausführungsbeispiele der Erfindung werden anhand der beigefügten Zeichnungen erläutert.

In den Figuren zeigen:
Fig. 1 eine schematische Skizze einer Verbindung eines Anschlusselements mit einer Schubstange mittels eines Schrauben-Mutterelements,
Fig. 2 eine schematische Skizze des Schrauben-Mutterelements,
Fig. 3 eine schematische Skizze des Anschlusselements und
Fig. 4 eine schematische Skizze der Verbindung des Anschlusselements mit der Schubstange
Fig. 5 eine schematische Skizze der Verbindung wie in Fig. 4 mit einer zusätzlichen Kontermutter zur Verspannung des Schrauben-Mutterelements.

Funktionsgleiche Teile sind in den Figuren durchgängig mit den gleichen Bezugszeichen gekennzeichnet.

In den hier gezeigten Ausführungsbeispielen besteht die Regeleinheit aus einem Wastegatekanal mit einem Schließelement. Eine Regelung des Drucks in dem Verdichtergehäuse kann aber auch durch eine variable Turbinengeometrie erfolgen. Dabei erfolgt eine Verstellung der Turbinengeometrie ebenso über eine Betätigung eines Aktuators.

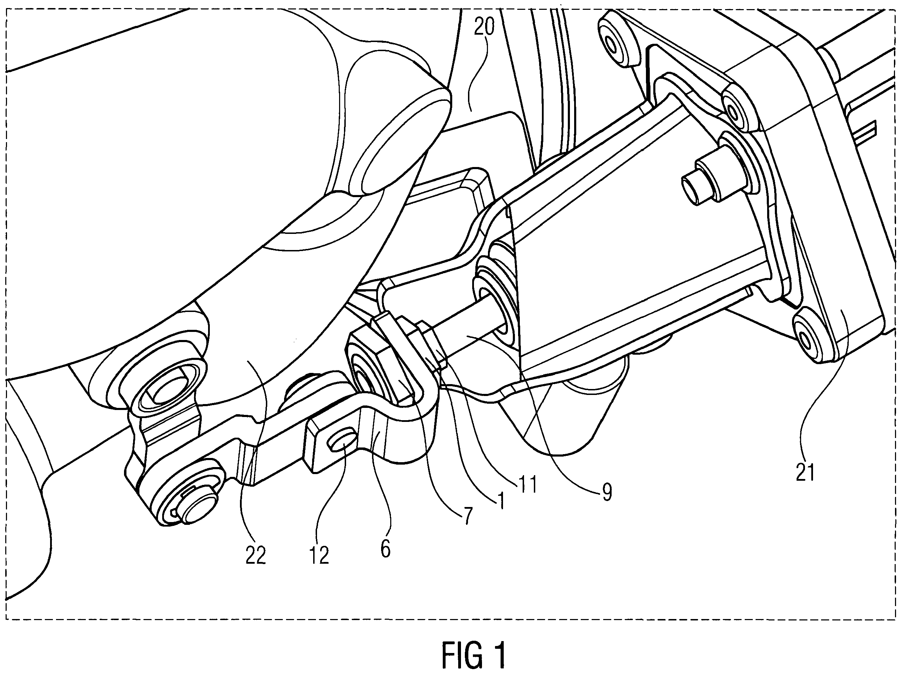

Die Figur 1 zeigt eine bei dem erfindungsgemäßen Abgasturbolader 20 verwendete Verbindung zwischen einer Schubstange 9 und einem Anschlusselement 6 mittels eines Schrauben-Mutterelementes 1. Die Schubstange 9 ist mit einem an dem Verdichtergehäuse des Abgasturboladers befestigten Aktuator 21 fest verbunden, während das Anschlusselement 6 über eine Gelenkverbindung an einem Bypassventil, das als Schließelement dient, eines sich im Turbinengehäuse 22 befindenden Wastegatekanals angeschlossen ist. Die Gelenkverbindung wird durch mindestens einen Hebel gebildet, der gelenkig an einem am Anschlusselement 6 angeordneten Ansatz 12 angelenkt ist. Der Aktuator 21 kann abhängig vom Druck im Verdichtergehäuse über die genannte Verbindung das Bypassventil mehr oder wenig weit öffnen bzw. schließen, um somit die Turbinenleistung zu regeln. Um in einer Kopplung zwischen dem Bypassventil und dem Aktuator 21 auftretende Fertigungs- und Montagetoleranzen auszugleichen, ist die Verbindung zwischen der Schubstange 9 und dem Anschlusselement 6 über das Schrauben-Mutterelement 1 ausgebildet.

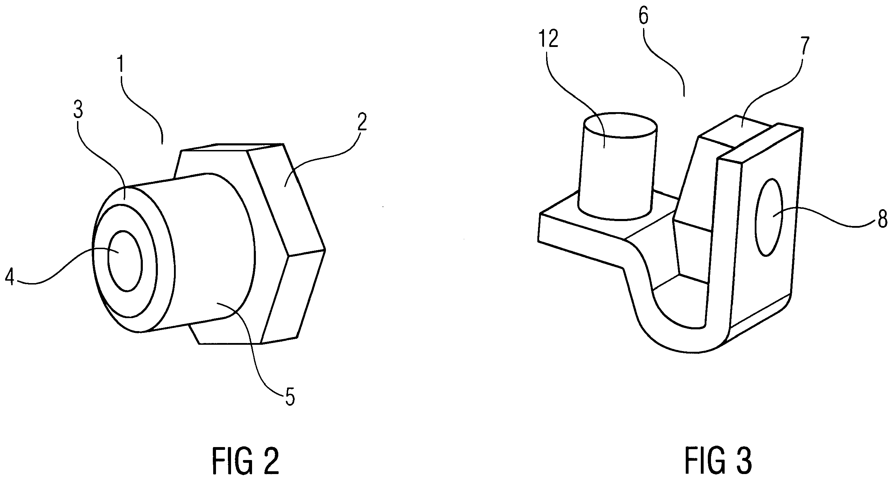

Die Figur 2 zeigt eine schematische Skizze des Schrauben-Mutterelements 1, das einen für das Aufsetzen eines Festziehwerkzeuges ausgebildeten Schraubenkopf 2 in Sechskantform aufweist, der mit einem zylinderförmigen, eine Bohrung aufweisenden Ansatzstück 3 einstückig verbunden ist. Die Bohrung ist mit einem Innengewinde 4 versehen und an dem zylinderförmigen Außenumfang des Ansatzstückes 3 ist ein Außengewinde 5 angebracht. Die das Innengewinde 4 aufweisende Bohrung durchgreift den Schraubenkopf 2. Das Schrauben-Mutterelement 1 ist zwecks einer möglichst einfachen Montage auf der Schubstange 9 vormontierbar.

Der Figur 3 ist eine schematische Skizze des Anschlusselements 6 zu entnehmen. Das Anschlusselement 6 besteht aus einem geraden Teil, der über einen gekrümmten Bereich mit einem abgewinkelten Teil einstückig verbunden ist. Der abgewinkelte Teil des Anschlusselements 6 ist mit einem einen sechskantförmigen Kopf aufweisenden Gewindestück 7 verschweißt, welches ein Innengewinde 8 aufweist. Eine Kontur des Innengewindes 8 ist deckungsgleich auf eine Öffnung des abgewinkelten Teils angebracht. Hierdurch kann das Schrauben-Mutterelement 1 durch die Öffnung mit dem Gewindestück 7 verschraubt werden. Statt des angeschweißten Gewindestücks 7 kann aber auch ein am Anschlusselement angeformtes Gewinde, das mit dem Schrauben-Mutterelement 1 verschraubt wird, vorgesehen sein. An dem geraden Teil des Anschlusselements 6 ist der Ansatz 12 angeformt, welcher über die Gelenkverbindung an das Bypassventil befestigt wird.

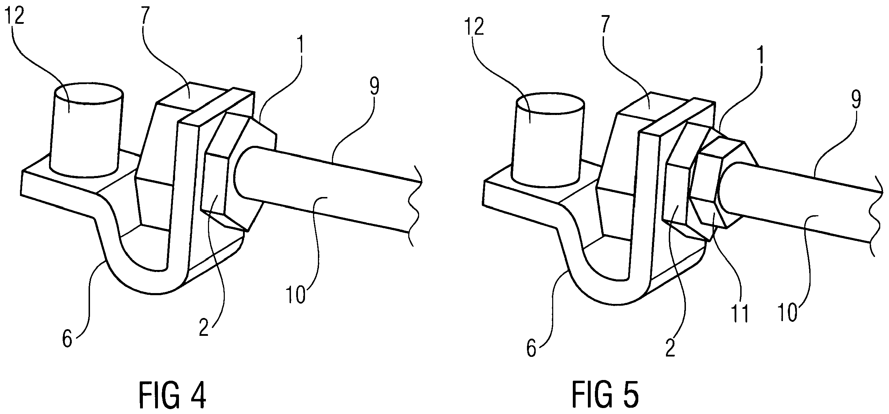

In der Figur 4 ist die Befestigung der Schubstange 9 mit dem Anschlusselement 6 mittels des Schrauben-Mutterelements 1 gezeigt. Die Schubstange 9 weist erfindungsgemäß ein Außengewinde 10 auf, das in Eingriff mit dem Innengewinde 4 des Schrauben-Mutterelements 1 steht. Das Außengewinde 5 des Schrauben-Mutterelements 1 ist mit dem Innengewinde 8 des Gewindestücks 7 verschraubt. Das Innengewinde 4 und das Außengewinde 5 des Schrauben-Mutterelements 1 verlaufen gleichsinnig und weisen hier die gleiche Steigung auf, wodurch eine Montage des Anschlusselements 6 mit der Schubstange 9 mittels des Schrauben-Mutterelements 1 einfach erfolgen kann. Beim Zusammenbau des Abgasturboladers wird für die Verbindung der Schubstange 9 mit dem Anschlusselement 6 das Bypassventil in eine geschlossene Position gebracht und der mit der Schubstange 9 verbundene Aktuator wird ebenfalls in einer der geschlossenen Position des Bypassventils entsprechende Endposition gefahren. Die Schubstange 9 und das Anschlusselement 6 bleiben in ihren daraus resultierenden Positionen stehen, während das auf der Schubstange 9 vormontierte Schrauben-Mutterelement 1 mittels eines externen Werkzeugs auf dem Außengewinde 10 der Schubstange 9 gedreht wird und dadurch in Richtung Anschlusselement 6 bewegt wird. So bewegt sich das Schrauben-Mutterelement auf das Gewindestück 7 des Anschlusselements 6 zu und wird mit seinem Außengewinde 5 mit dem Innengewinde 8 des Gewindestückes 7 in Eingriff gebracht. Ein Toleranzausgleich in Längsrichtung der Schubstanges 9 erfolgt in dem Sinne, dass die Schubstange 9 dabei mehr oder weniger durch das Gewindestück 7 und das Schrauben-Mutterelement 1 hindurch ragt. Die Verbindung ist somit variabel einstellbar.

Im gezeigten Ausführungsbeispiel ist der genannte Aktuator ein elektrischer Aktuator. Ein derartiger elektrischer Aktuator bietet im Vergleich zu einem pneumatischen Aktuator eine höhere Stellgeschwindigkeit, eine höhere Stellgenauigkeit und höhere Stellkräfte. Falls ein pneumatischer Aktuator vorgesehen ist, können auch unterschiedliche Steigungen für das Innengewinde 4 und das Außengewinde 5 verwendet werden. Durch die unterschiedlichen Steigungen der Gewinde verschiebt sich bei der Montage die Verbindung zwischen dem Anschlusselement 6 und der Schubstange 9. Diese unterschiedliche Position kann durch eine Rückstellung einer sich im Aktuator befindenden Feder kompensiert werden und bei der Montage wird die Feder des Aktuators somit vorgespannt. Letzteres ist bei dem elektrischen Aktuator nicht möglich. Bei der Verwendung des elektrischen Aktuators ist es deshalb wichtig, dass das Innengewinde 4 und das Außengewinde 5 die gleiche Steigung besitzen.

In der Figur 5 ist das Schrauben-Mutterelement 1 zusätzlich zu der Ausführungsform in Figur 4 mit einer einen Außensechskant aufweisenden Kontermutter 11 auf dem Außengewinde 10 der Schubstange 9 verspannt. Ist der anhand der Fig. 1 beschriebene Toleranzausgleich erfolgt, dann wird das Schrauben-Mutterelement 1 mit der Kontermutter 11 verspannt. Die Kontermutter 11 verhindert ein Verdrehen des Schrauben-Mutterelements 1 auf der Schubstange 9 während des Betriebs, was einem Verschleiß des Schrauben-Mutterelements 1 vorbeugt. Für eine optimale Montage ist die Kontermutter 11 vor dem Verspannen mit dem Schrauben-Mutterelement 1 auf der Schubstange 9 vormontiert.

## Patentansprüche

1. Abgasturbolader (20) mit einer Regeleinheit zur Leistungsregelung des Abgasturboladers (20), und einem Aktuator (21) zur Betätigung der Regeleinheit, wobei die Regeleinheit über einen ihr zugeordneten Betätigungshebel mittels einer Schubstange (9) des Aktuators (21) betätigbar ist und die Schubstange (9) mit dem Betätigungshebel der Regeleinheit über ein Einstellglied verbunden ist, wobei
das Einstellglied ein Schrauben-Mutterelement (1) und ein Anschlusselement (6) aufweist, wobei das Anschlusselement (6) mit dem Betätigungshebel gekoppelt ist und das Schrauben-Mutterelement (1) einen ersten Gewindebereich aufweist, über den es mit dem Anschlusselement (6) gekoppelt ist und einen zweiten Gewindebereich, über den es mit der Schubstange (9) gekoppelt ist, **dadurch gekennzeichnet, dass**
das Schrauben-Mutterelement (1) ein in einer Durchgangsbohrung angeordnetes Innengewinde (4) und ein auf dem Außenumfang eines zylinderförmigen Ansatzstückes angeordnetes Außengewinde (5) aufweist und
das Anschlusselement (6) ein dem Außengewinde (5) des Schrauben-Mutterelementes (1) entsprechendes Innengewinde (8) und die Schubstange (9) dazu korrespondierend ein dem Innengewinde (4) des Schrauben-Mutterelementes (1) entsprechendes Außengewinde (10) aufweist, die jeweils mit dem Schrauben-Mutterelement (1) verschraubt sind,
wobei das Innengewinde (4) in der Durchgangsbohrung und das Außengewinde (5) auf dem Ansatzstück des Schrauben-Mutterelementes (1) jeweils gleichsinnig verlaufen und eine gleiche Steigung oder unterschiedliche Steigungen aufweisen.

2. Abgasturbolader nach Anspruch 1, **dadurch gekennzeichnet, dass** das Schrauben-Mutterelement (1) einen für das Aufsetzen eines Festziehwerkzeuges ausgebildeten Betätigungsbereich (2) aufweist, der mit dem Ansatzstück (3) einstückig verbunden ist.

3. Abgasturbolader nach Anspruch 1 oder 2, wobei der Aktuator ein elektromechanischer Aktuator ist, **dadurch gekennzeichnet, dass** das Innen- (4) und das Außengewinde (5) des Schrauben-Mutterelementes (1) jeweils die gleiche Steigung aufweisen.

4. Abgasturbolader nach Anspruch 1 oder 2, wobei der Aktuator ein pneumatischer Aktuator ist, **dadurch gekennzeichnet, dass** das Innen- (4) und das Außengewinde (5) des Schrauben-Mutterelementes (1) jeweils eine unterschiedliche Steigung aufweisen.

5. Abgasturbolader nach einem der vorangehenden Ansprüche, **dadurch gekennzeichnet, dass** das Schrauben-Mutterelement (1) mit einer Kontermutter (11) verspannt ist.

6. Abgasturbolader nach Anspruch 5, **dadurch gekennzeichnet, dass** die Kontermutter(11) zum Verspannen des Schrauben-Mutterelementes (1) mit der Schubstange (9) verbunden ist.

## Claims

1. Exhaust-gas turbocharger (20) having a regulating unit for regulating the power of the exhaust-gas turbocharger (20), and having an actuator (21) for operating the regulating unit, wherein the regulating unit can be operated, via an operation lever assigned thereto, by way of a thrust rod (9) of the actuator (21), and the thrust rod (9) is connected to the operation lever of the regulating unit via an adjustment member, wherein
the adjustment member has a screw-nut element (1) and an attachment element (6), wherein the attachment element (6) is coupled to the operation lever and the screw-nut element (1) has a first threaded region, via which it is coupled to the attachment element (6), and a second threaded region, via which it is coupled to the thrust rod (9), **characterized in that**
the screw-nut element (1) has an internal thread (4) arranged in a passage bore and has an external thread (5) arranged on the outer circumference of a cylindrical projection piece, and the attachment element (6) has an internal thread (8) corresponding to the external thread (5) of the screw-nut element (1), and the thrust rod (9) has, correspondingly thereto, an external thread (10) corresponding to the internal thread (4) of the screw-nut element (1), which internal thread (8) and external thread (10) are in each case screwed to the screw-nut element (1),
wherein the internal thread (4) in the passage bore and the external thread (5) on the projection piece of the screw-nut element (1) run in each case codirectionally and have the same pitch or different pitches.

2. Exhaust-gas turbocharger according to Claim 1, **characterized in that** the screw-nut element (1) has an operation region (2) designed for the engagement of a tightening tool, which region is integrally connected to the projection piece (3).

3. Exhaust-gas turbocharger according to Claim 1 or 2, wherein the actuator is an electromechanical actuator, **characterized in that** the internal thread (4) and the external thread (5) of the screw-nut element (1) each have the same pitch.

4. Exhaust-gas turbocharger according to Claim 1 or 2, wherein the actuator is a pneumatic actuator, **characterized in that** the internal thread (4) and the external thread (5) of the screw-nut element (1) each have a different pitch.

5. Exhaust-gas turbocharger according to one of the preceding claims, **characterized in that** the screw-nut element (1) is braced by way of a lock nut (11).

6. Exhaust-gas turbocharger according to Claim 5, **characterized in that** the lock nut (11) for bracing the screw-nut element (1) is connected to the thrust rod (9).

## Revendications

1. Turbocompresseur à gaz d'échappement (20) comprenant une unité de régulation pour la régulation de la puissance du turbocompresseur à gaz d'échappement (20) et un actionneur (21) pour l'actionnement de l'unité de régulation, l'unité de régulation pouvant être actionnée par le biais d'un levier d'actionnement qui lui est associé au moyen d'une tige de poussée (9) de l'actionneur (21) et la tige de poussée (9) étant connectée au levier d'actionnement de l'unité de régulation par le biais d'un organe de réglage,
l'organe de réglage présentant un élément vis-écrou (1) et un élément de raccord (6), l'élément de raccord (6) étant accouplé au levier d'actionnement et l'élément vis-écrou (1) présentant une première région filetée par le biais de laquelle il est accouplé à l'élément de raccord (6) et une deuxième région filetée par le biais de laquelle il est accouplé à la tige de poussée (9), **caractérisé en ce que** l'élément vis-écrou (1) présente un filetage interne (4) disposé dans un alésage traversant et un filetage externe (5) disposé sur la périphérie extérieure d'une pièce rapportée de forme cylindrique et l'élément de raccord (6) présentant un filetage interne (8) correspondant au filetage externe (5) de l'élément vis-écrou (1) et la tige de poussée (9) présentant de manière correspondante un filetage externe (10) correspondant au filetage interne (4) de l'élément vis-écrou (1), lesquels sont à chaque fois vissés à l'élément vis-écrou (1), le filetage interne (4) dans l'alésage traversant et le filetage externe (5) sur la pièce rapportée de l'élément vis-écrou (1) s'étendant à chaque fois dans le même sens et présentant un pas identique ou des pas différents.

2. Turbocompresseur à gaz d'échappement selon la revendication 1, **caractérisé en ce que** l'élément vis-écrou (1) présente une région d'actionnement (2) réalisée pour le positionnement d'un outil de serrage qui est connecté d'une seule pièce à la pièce rapportée (3).

3. Turbocompresseur à gaz d'échappement selon la revendication 1 ou 2, dans lequel l'actionneur est un actionneur électromécanique, **caractérisé en ce que** le filetage interne (4) et le filetage externe (5) de l'élément vis-écrou (1) présentent à chaque fois le même pas.

4. Turbocompresseur à gaz d'échappement selon la revendication 1 ou 2, dans lequel l'actionneur est un actionneur pneumatique, **caractérisé en ce que** le filetage interne (4) et le filetage externe (5) de l'élément vis-écrou (1) présentent à chaque fois un pas différent.

5. Turbocompresseur à gaz d'échappement selon l'une quelconque des revendications précédentes, **caractérisé en ce que** l'élément vis-écrou (1) est serré avec un contre-écrou (11).

6. Turbocompresseur à gaz d'échappement selon la revendication 5, **caractérisé en ce que** le contre-écrou (11) est connecté à la tige de poussée (9) pour serrer l'élément vis-écrou (1).
